# EUROPEAN PATENT APPLICATION

(11) **EP 4 772 475 A1**
(43) Date of publication of application: **08.07.2026**
(21) Application number: 24902273.2
(22) Date of filing: 24.09.2024
(51) Int. Cl.: C01G 53/00, H01M 4/36, H01M 10/0525, C01F 7/021, C01G 41/02, C01G 23/08, B82Y 40/00, B82Y 30/00

(54) **PRECURSOR AND PREPARATION METHOD THEREFOR, POSITIVE ELECTRODE ACTIVE MATERIAL AND PREPARATION METHOD THEREFOR, POSITIVE ELECTRODE AND LITHIUM-ION BATTERY**

(30) Priority: 12.12.2023 CN 202311705633
(71) Applicant: XTC New Energy Materials (Xiamen) Co., Ltd., Xiamen, Fujian 361026 (CN)
(72) Inventor: WEI, Guozhen, Xiamen, Fujian 361026 (CN); WANG, Taigan, Xiamen, Fujian 361026 (CN); LIN, Qian, Xiamen, Fujian 361026 (CN); YE, Yaobin, Xiamen, Fujian 361026 (CN); CHI, Tianxi, Xiamen, Fujian 361026 (CN)
(74) Representative: Metida
(86) International application number: PCT/CN2024/120712
(87) International publication number: WO 2025/123847

(57) **Abstract**

The present disclosure provides a precursor of a positive electrode active material. A particle of the precursor includes a core and a shell covering the core. Each of the core and the shell is made of nickel cobalt manganese oxide or nickel cobalt manganese hydroxide. The core is doped with a fluxing agent, and the fluxing agent is selected from one or more of an oxide, a carbonic acid compound, and a hydroxide of a first metal element, and the first metal element at least is one of Sr, Li, Mg, Ni, Co, and Zr. The shell is doped with a reaction inhibitor. The reaction inhibitor is selected from one or more of lithium compounds, an oxide, a carbonic acid compound, a hydroxide, and other compounds of a second metal element, and the second metal element at least is one of Ta, W, Al, Mn, Mo, and La. A fluxing agent is disposed in the core of the particle of the precursor, and the reaction inhibitor is disposed in the shell, so that subsequent crystallization of the precursor develops from inside to outside. The present disclosure further provides a positive electrode active material and a preparation method therefor, a positive electrode comprising the positive electrode active material, a lithium-ion battery, and a preparation method for the precursor.

## Description

### CROSS-REFERENCE TO RELATED APPLICATION

The present application claims priority to China Application No. 202311705633.8, filed on December 12, 2023, entitled "PRECURSOR AND PREPARATION METHOD THEREFOR, POSITIVE ELECTRODE ACTIVE MATERIAL AND PREPARATION METHOD THEREFOR, POSITIVE ELECTRODE AND LITHIUM-ION BATTERY", in China National Intellectual Property Administration, the entire contents of which are hereby incorporate by reference.

### FIELD

The disclosure generally relates to a precursor of a positive electrode active material and a preparation method therefor, a method for preparing a positive electrode active material and a positive electrode active material prepared thereby, and a positive electrode and a lithium-ion battery including the positive electrode active material.

### BACKGROUND

Currently, ternary positive electrode materials are mainly produced by preparing a precursor by a co-precipitation method, mixing the precursor with a certain amount of a lithium source and additives, and subjecting the mixture to a high-temperature solid-phase sintering procedure, thereby obtaining the ternary single-crystal materials with a certain particle size. By regulating the precursor preparation, the main content elements, trace elements, particle size distribution, specific surface area, tap density, sphericity, density, whisker thickness, crystal plane parameters and other indicators of the precursor are adjusted, thereby obtaining various ternary precursors that meet project requirements. At present, during the high-temperature solid-phase sintering of most precursors, the precursor forms multiple crystal nuclei. Due to ion migration at high temperatures, the crystal nuclei further aggregate and grow, and a certain degree of micro-agglomeration may happen during the above period. Thus, a high-intensity air flow crushing process is needed to achieve the effect of dispersing single crystals, but some structural morphologies such as twins and quasi-single crystals may be inevitable in the crushed material. When such morphological materials are fabricated into batteries, the materials may crack during the charge-discharge cycles of the batteries due to phase transition, lattice distortion and other reasons, thereby exposing new surfaces that will undergo side reactions with the electrolyte, which degrades the electrochemical performance of the battery materials.

### SUMMARY

In a first aspect, the present application provides a precursor of a positive electrode active material. A particle of the precursor includes a core and a shell covering the core. Each of the core and the shell is made of nickel cobalt manganese oxide or nickel cobalt manganese hydroxide. The chemical formula of the nickel cobalt manganese hydroxide is NiₓCo_{γ}Mnz(OH)₂, the chemical formula of the nickel cobalt manganese oxide is NiₓCo_{γ}MnzO, and 0.33 ≤ x ≤ 1.0, 0 ≤ y ≤ 0.33, x + y + z = 1. The core is doped with a fluxing agent, and the fluxing agent is selected from one or more of an oxide, a carbonic acid compound, and a hydroxide of a first metal element, and the first metal element is at least one of Sr, Li, Mg, Ni, Co, and Zr. The shell is doped with a reaction inhibitor, and the reaction inhibitor is selected from one or more of a lithium compound, an oxide, a carbonic acid compound, a hydroxide, and other compounds of a second metal element, and the second metal element is at least one of Ta, W, Al, Mn, Mo, and La.

The fluxing agent is disposed in the core of the particle of the precursor, and the reaction inhibitor is disposed in the shell, so that subsequent crystallization of the precursor develops from inside to outside. That is, the closer to the center of the core, the better and more complete the crystallization. High-valence cations added as the reaction inhibitor in the shell can suppress crystallization and ion migration of the precursor, resulting in a large difference between the critical reaction temperatures of the core and the shell. The precursor with this structure enables the preparation of a highly dispersed and highly spheroidized single-crystal ternary positive electrode active material.

In a second aspect, the present application provides a method for preparing a positive electrode active material. The method includes following steps:
subjecting the precursor of the positive electrode active material according to any one of the first aspect and a lithium source to a primary sintering at a temperature of 600 °C to 950 °C in an air atmosphere or a high-purity oxygen atmosphere;
mixing a product of the primary sintering with an activity inhibitor for a secondary sintering at a temperature of 300 °C to 850 °C in a high-purity oxygen atmosphere; and
mixing a product of the secondary sintering with a nano-coating material for a tertiary sintering at a temperature of 300 °C to 850 °C in a high-purity oxygen atmosphere, wherein the nano-coating material is configured to suppress reactions with an electrolyte and improve material interface reaction kinetics.

The addition of the activity inhibitor during the secondary sintering can reduce surface energy and prevent secondary crystallization caused by ion migration between adjacent precursors. The surface energy of the core-shell structure is higher than that between particles, so that the particles grow directionally inward. By using the above precursor together with the activity inhibitor during the secondary sintering, a highly dispersed and highly spheroidized single-crystal ternary positive electrode active material can be obtained.

In a third aspect, the present application provides a positive electrode active material, wherein the positive electrode active material is prepared by the method of the second aspect.

In a fourth aspect, the present application provides a positive electrode. The positive electrode includes a positive electrode current collector and a positive electrode active material layer disposed on the positive electrode current collector. The positive electrode active material layer comprises a positive electrode active material prepared by the method of the second aspect.

In a fifth aspect, the present application provides a lithium-ion battery. The lithium-ion battery includes a positive electrode, a separator and a negative electrode stacked in sequence. The positive electrode is the positive electrode according to the third aspect.

In a sixth aspect, the present application provides a method for preparing the precursor of the positive electrode active material of the first aspect. The method includes following steps:
mixing a nickel salt, a cobalt salt, and a manganese salt with water to obtain a solution I;
adding a precipitating alkali solution into a reaction vessel;
continuously feeding the solution I and a complexing agent solution into the reaction vessel for reaction, thereby obtaining particles of the precursor;
adding a fluxing agent metal salt solution into the reaction vessel, wherein the fluxing agent metal salt solution is selected from at least one of Sr salt solution, Li salt solution, Mg salt solution, Ni salt solution, Co salt solution, and Zr salt solution;
gradually reducing the feeding rate of the fluxing agent metal salt solution into the reaction vessel to zero when the particles of the precursor grow to 1.2 µm to 1.6 µm;
adding a reaction inhibitor metal salt solution into the reaction vessel, and gradually increasing the feeding rate of the reaction inhibitor metal salt solution into the reaction vessel, wherein the reaction inhibitor metal salt solution is selected from at least one of Ta oxide solution, W salt solution, Al salt solution, Mn salt solution, Mo salt solution, and La salt solution; and
terminating the reaction, and subjecting a slurry in the reaction vessel to centrifugation, filtration, washing, drying, and sieving to obtain the particles of the precursor.

### BRIEF DESCRIPTION OF THE DRAWINGS

FIG. 1 is a diagrammatic view of a particle of a precursor of a positive electrode active material according to an embodiment of the present application.
FIG. 2 is a scanning electron microscopy (SEM) view of a positive electrode active material prepared in Embodiment 1.
FIG. 3 is an X-ray diffraction (XRD) pattern of a positive electrode active material prepared in Embodiment 1.
FIG. 4 is a SEM view of a positive electrode active material prepared in Embodiment 2.
FIG. 5 is an XRD pattern of a positive electrode active material prepared in Embodiment 2.

### DETAILED DESCRIPTION

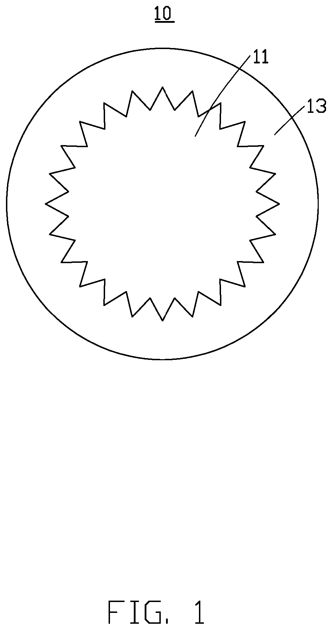

The present disclosure provides a precursor of a positive electrode active material used in a lithium-ion battery. FIG. 1 illustrates an embodiment of a particle of the precursor 10, which includes a core 11 and a shell 13 covering the core 11. The material of the particle of the ternary precursor is nickel cobalt manganese oxide or nickel cobalt manganese hydroxide, that is, the main material of each of the core 11 and the shell 13 is nickel cobalt manganese oxide or nickel cobalt manganese hydroxide.

The chemical formula of nickel cobalt manganese hydroxide is NiₓCo_{γ}Mnz(OH)₂, the chemical formula of nickel cobalt manganese oxide is NiₓCo_{γ}MnzO, and 0.33 ≤ x ≤ 1.0, 0 ≤ y ≤ 0.33, x+y+z=1.

In at least one embodiment, the core 11 is doped with a fluxing agent. The fluxing agent is selected from one or more of an oxide, a carbonic acid compound, and a hydroxide of a first metal element, and the first metal element is at least one of Sr, Li, Mg, Ni, Co, and Zr. The weight of the fluxing agent is 100 ppm to 2000 ppm based on the total weight of the precursor. The fluxing agent facilitates the crystallization of the precursor.

In at least one embodiment, the shell 13 is doped with a reaction inhibitor. The reaction inhibitor is selected from one or more of a lithium compound, an oxide, a carbonic acid compound, a hydroxide, and other compounds of a second metal element, and the second metal element is at least one of Ta, W, Al, Mn, Mo, and La. The weight of the reaction inhibitor is 100 ppm to 4000 ppm based on the total weight of the precursor. A composition of the reaction inhibitor is selected to have a high-valence cation to suppress crystallization and ion migration of the precursor.

Along the direction from the center of the core 11 to the shell 13, the concentration of the fluxing agent gradually decreases, and the concentration of the reaction inhibitor gradually increases. The closer to the center of the core 11, the higher the concentration of the fluxing agent and the lower the concentration of the reaction inhibitor. Therefore, the concentration gradients of the fluxing agent and the reaction inhibitor can induce radial single-crystal growth of the precursor from inside to outside.

The outer surface of the core 11 is irregular and serrated, which enhances the contact area between the core 11 and the shell 13. The outer surface of the core 11 defines a gap between two teeth, which is configured to accumulate a part of residual lithium therein during subsequent penetration of a lithium source into the interior of the particle of the precursor.

The outer diameter of the particle of the precursor is in the range of 3.0 µm to 8.0 µm. The diameter of the core of the particle of the precursor is at least 1.3 µm. The specific surface area of the particle of the precursor is 5 m²/g to 50 m²/g.

The embodiment for manufacturing the precursor of the positive electrode active material includes the following steps S1 to S7.

At step S1, S a nickel salt, a cobalt salt and a manganese salt are mixed with water to obtain a solution I. The molar ratio of nickel, cobalt and manganese is x:y:z, and 0.33 ≤ x ≤ 1.0, 0 ≤ y ≤ 0.33, x+y+z=1.

At step S2, a precipitating alkali solution is added to a reaction vessel. The alkali in the precipitating alkali solution is used to react with the nickel salt, the cobalt salt and the manganese salt in the solution I to form a hydroxide precipitate. The alkali is, but not limited to sodium hydroxide.

At step S3, the solution I and a complexing agent solution are continuously fed into the reaction vessel and react with each other to form particles of the precursor. The complexing agent solution, such as ammonia water, is used to complex with the reactants and promote the nucleation and growth.

At step S4, a fluxing agent metal salt solution is added to the reaction vessel. The fluxing agent metal salt solution is selected from at least one of Sr salt solution, Li salt solution, Mg salt solution, Ni salt solution, Co salt solution and Zr salt solution.

At step S5, when a core of the particle of the precursor grows to 1.3 µm to 1.6 µm, the feeding rate of the fluxing agent metal salt solution into the reaction vessel is gradually reduced to zero.

At step S6, a metal salt solution or an oxide solution of a reaction inhibitor is added to the reaction vessel, and the feeding rate of the metal salt solution or the oxide solution of the reaction inhibitor is gradually increased.

During steps S4 to S6, the solution I and the complexing agent solution are continuously fed into the reaction vessel. In addition, the feeding rate of the solution I is constant in steps S3 to S5, and may be increased when proceeding to Step S6, so as to obtain a core 11 whose outer surface is irregular and serrated.

The metal salt solution or the oxide solution of the reaction inhibitor is selected from at least one of Ta oxide solution, W salt solution, Al salt solution, Mn salt solution, Mo salt solution and La salt solution. In some embodiments, when the reaction inhibitor is Ta compound, tantalum pentoxide may be used in step S6; when the reaction inhibitor is W compound, ammonium tungstate or sodium tungstate may be used in step S6; when the reaction inhibitor is Al compound, aluminum nitrate or sodium aluminate may be used in step S6; when the reaction inhibitor is Mn compound, manganese sulfate may be used in step S6; when the reaction inhibitor is Zr compound, zirconium nitrate or zirconium oxychloride may be used in step S6; when the reaction inhibitor is Mo compound, sodium molybdate may be used in step S6; when the reaction inhibitor is La compound, lanthanum nitrate may be used in step S6.

At step S7, the reaction is terminated, and a slurry in the reaction vessel is subjected to centrifugation, filtration, washing, drying and sieving to obtain the particles of the precursor.

In step S7, the drying temperature is controlled at or below 200 °C, and the material of particles of the precursor obtained by this method is nickel cobalt manganese hydroxide. If nickel cobalt manganese oxide needs to be prepared, the drying temperature may be controlled at 400 °C to 500 °C to dehydrate nickel cobalt manganese hydroxide into nickel cobalt manganese oxide.

The embodiment for manufacturing the positive electrode active material includes the following steps 1 to 3.

At step 1, the precursor of the positive electrode active material prepared as described above is mixed with a lithium source and an additive, and the mixture is subjected to primary sintering at a temperature of 600 °C to 950 °C in an air atmosphere or a high-purity oxygen atmosphere.

At step 2, a product of the primary sintering is mixed with an activity inhibitor, and the mixture is subjected to secondary sintering at a temperature of 300 °C to 850 °C in a high-purity oxygen atmosphere.

At step 3, a product of the secondary sintering mixed with a nano-coating material, and the mixture is subjected to tertiary sintering at a temperature of 300 °C to 850 °C in a high-purity oxygen atmosphere.

In step 1, the precursor, the lithium source and the additive are prepared in a specified ratio, and the additive is a high-valence cation for structural stabilization. During the high-temperature of the primary sintering, the lithium source and additive penetrate into the interior of particles of the precursor. The core grows preferentially owing to the presence of a fluxing agent, thereby forming crystalline nuclei, while the shell grows to lower degree due to the presence of reaction-restricting elements. The lithium source may be lithium hydroxide, lithium carbonate or lithium nitrate., but is not limited thereto. In some embodiments, the molar ratio of the precursor, the lithium source and the additive is 1:1.02:0.001 to 1:1.06:0.01.

In Step 2, the product obtained by the primary sintering is cooled, and the activity inhibitor is added into the product and mixed at high-speed. The temperature of the secondary sintering is higher than the temperature of the primary sintering of the step 1, whereby a ternary oxide with a layered structure is formed on the shell of the precursor via a solid-phase reaction. The activity inhibitor is employed to reduce the surface energy of the material. Due to the coating of the activity inhibitor on the exterior and under the influence of the surface energy of the core, the elements in the shell cause each particle of the precursor to gradually develop into a single single-crystal ternary material. The activity inhibitor is selected from one or more of B₂O₃, V₂O₅, V₂O₄, Bi₂O₃, MnO₂, MoO₃, LaNO₃, La₂O and NbNO₃. In some embodiments, the mass ratio of the product of step 1 to the activity inhibitor is 1:0.0005 to 1:0.01.

In Step 3, the product obtained from Step 2 is cooled and mixed with a nano-coating material, which is capable of suppressing reactions with electrolytes and improving the material interface reaction kinetics, and the mixture is subjected to the tertiary sintering in an oxygen atmosphere to obtain a composite-modified, highly dispersed and highly spheroidized ternary cathode material. The nano-coating material may be nanoscale aluminum oxide, nanoscale titanium oxide, nanoscale aluminum hydroxide, nanoscale aluminum oxyhydroxide, and nanoscale tungsten oxide. In some embodiments, the mass ratio of the product of step 2 to the nano-coating material is 1:0.001 to 1:0.02.

The present disclosure further provides a positive electrode active material prepared by the above preparation method of the positive electrode active material
In at least one embodiment, in the particle of the precursor, the core has the fluxing agent distributed in a gradient concentration, and the shell has the reaction inhibitor distributed in a gradient concentration, so that subsequent crystallization of the precursor develops from inside to outside. That is, the closer to the center of the core, the better and more complete the crystallization. High-valence cations added as the reaction inhibitor in the shell can suppress crystallization and ion migration of the precursor, resulting in a large difference between the critical reaction temperatures of the core and the shell.

The addition of the activity inhibitor during the secondary sintering can reduce surface energy and prevent secondary crystallization caused by ion migration between adjacent precursors. The surface energy of the core-shell structure is higher than that between particles, so that the particles grow directionally inward. By using the above precursor together with the activity inhibitor during the secondary sintering, a highly dispersed and highly spheroidized single-crystal ternary positive electrode active material can be obtained.

The present disclosure further provides a positive electrode, including a positive electrode current collector and a positive electrode active material layer disposed on the the positive electrode current collector. The positive electrode active material layer includes a positive electrode active material prepared by the above preparation method.

The positive electrode active material layer further includes a conductive agent, a binder and so on.

The present disclosure further provides a lithium-ion battery, includes a positive electrode, a separator and a negative electrode stacked in sequence. The positive electrode is the positive electrode described above.

Specific description is given below with reference to Embodiments 1 to 5.

### Embodiment 1

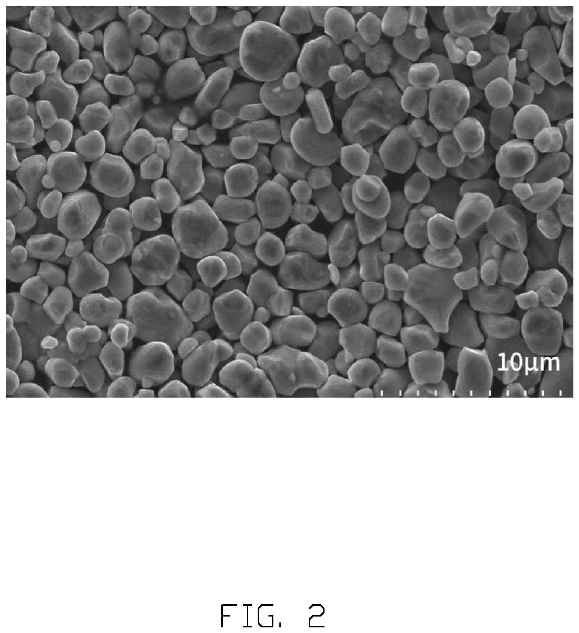

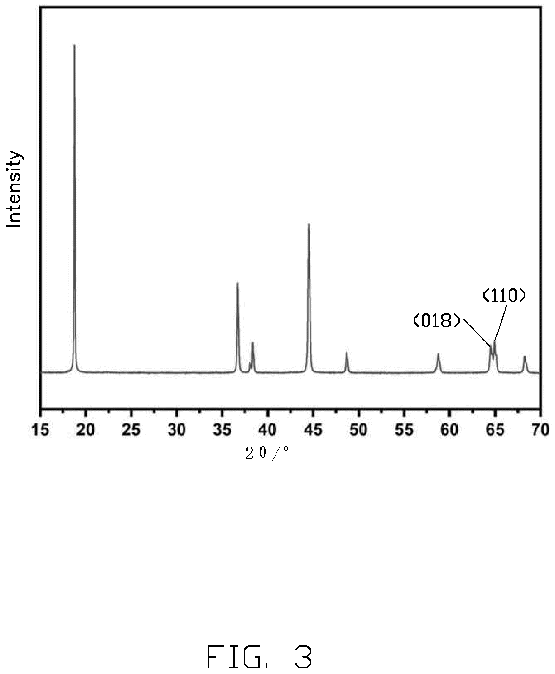

(1) The primary materials for synthesizing the precursor were nickel sulfate, cobalt sulfate and manganese sulfate. Nickel sulfate, cobalt sulfate, and manganese sulfate were mixed, wherein a molar ratio of nickel, cobalt and manganese was 8:1:1. Then, deionized water was added into the primary materials and stirred to form a salt solution with a concentration of 2.0 mol/L.
(2) A sodium hydroxide solution of 9 mol/L was added as the precipitant alkali to the reaction kettle. Deionized water was then added to the reaction kettle, and the mixture was stirred uniformly to adjust the pH to 11.75. Ammonia water was added, the ammonia concentration was controlled to be 4 g/L, the solution temperature was maintained at 40 °C. Nitrogen was continuously introduced as a protective gas.
(3) The salt solution obtained by step (1) was fed into the reaction kettle at a flow rate of 4 L/h. The stirring frequency of the reaction kettle was 40 Hz. Ammonia water was continuously added as a complexing agent and nitrogen was introduced to the reaction kettle to maintain the pH of the reaction system at 11.50. At the same time, a magnesium sulfate solution of 1 mol/L was simultaneously fed at a speed of 0.1 L/h for co-precipitation reaction. An amount of slurry was taken from the reaction kettle every 2 h, and the slurry was subjected to centrifugation, filtration, washing, drying and sieving to obtain a dried sample, and the particle size of the dried sample was tested using a Malvern particle size analyzer.
(4) When the D50 of the precursor grew to 1.5 µm, the feeding rate of magnesium sulfate was reduced at a speed of 0.02 L/h until zero, thereby obtaining a core of the precursor with doped Mg in a gradient concentration. The D50 of the core was 1.7 µm.
(5) The flow rate of the nickel-cobalt-manganese salt solution was increased to 8 L/h, the stirring frequency was maintained at 40 Hz, the pH of the solution in the reaction kettle was adjusted to 11.0, and an ammonium tungstate solution of 2 mol/L was added at an initial rate of 0.02 L/h. The adding speed of the ammonium tungstate solution was increased by 0.03 L/h per hour until it reached 0.2 L/h, then the adding speed was kept constant. An amount of slurry was taken from the reaction kettle every 2 h, and the slurry was centrifuged, filtered, washed, dried and sieved to obtain a dried sample, and the particle size was tested using a Malvern particle size analyzer.
(6) When the D50 of the precursor reaches 2.0 µm, the reaction was stopped. The slurry in the reaction kettle was centrifuged, filtered, washed, dried and sieved to obtain a ternary precursor with a special structure and dual gradient concentration element distribution. Tungsten exists in the shell in the form of tungstate.
(7) The precursor obtained from the previous step was mixed with lithium hydroxide and zirconium dioxide at a molar ratio of 1:1.03:0.001 at high speed. The mixture was loaded into a sagger and placed in a muffle furnace. Oxygen was introduced to control the oxygen concentration inside the muffle furnace to 95%, and a sintering process was carried out at a high temperature of 820 °C for 8 hours. After cooling, the product was removed from the muffle furnace.
(8) The material obtained from the above steps was mixed with nano-vanadium pentoxide at a mass ratio of 1:0.005 at high speed. The mixture was loaded into a sagger and placed in a muffle furnace. Oxygen was introduced to control an oxygen concentration of 95% inside the muffle furnace, and a sintering process was carried out at a high temperature of 880 °C for 10 hours. After cooling, the product was removed from the muffle furnace and subjected to mechanical dispersion using a mechanical pulverizer to de-agglomerate the soft aggregates formed during the high-temperature process.
(9) The material obtained from the above steps was mixed with nano-aluminum oxide at a mass ratio of 1:0.003 at high speed. The mixture was loaded into a sagger and placed in a muffle furnace. Oxygen was introduced to control the oxygen concentration inside the muffle furnace to 85%, and a constant-temperature sintering process was carried out at 600 °C for 10 hours. After cooling, the product was removed from the muffle furnace, yielding highly dispersed single-crystal NCM811 ternary material.
   The SEM view of the single-crystal NCM811 ternary material was shown in Figure 2, and the XRD pattern was shown in Figure 3. As can be seen from Figure 2, the single-crystal particles of the NCM811 ternary material were obviously dispersed and exhibit a high single-crystallization characteristic. As can be seen from Figure 3, each diffraction peak was sharp, and the splitting of (018) and (110) peaks was obvious, indicating that the material has typical layered characteristics of a cathode material.
(10) The single-crystal NCM811 ternary material was sieved, then uniformly mixed with a binder (PVDF) and conductive carbon black at a ratio of 94:3:3 to obtain a positive electrode slurry. The positive electrode slurry was uniformly coated on an aluminum foil, dried in an oven at 130 °C, and roll-pressed to obtain a cathode sheet. A disk with a diameter of 14 mm was cut using a sheet cutter, vacuum-dried for 14 h, and then transferred into a glove box. In the glove box, a coin cell was assembled with a lithium sheet, spacers, a positive electrode case, a polypropylene separator and 1 mol/L LiPF₆ electrolyte.

### Embodiment 2

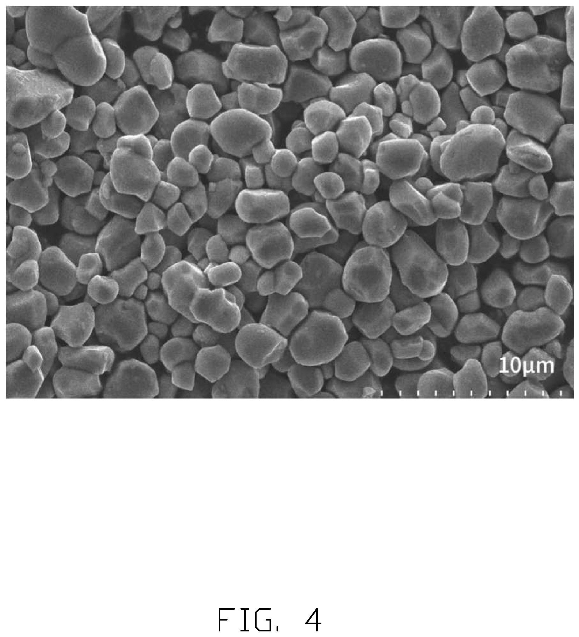

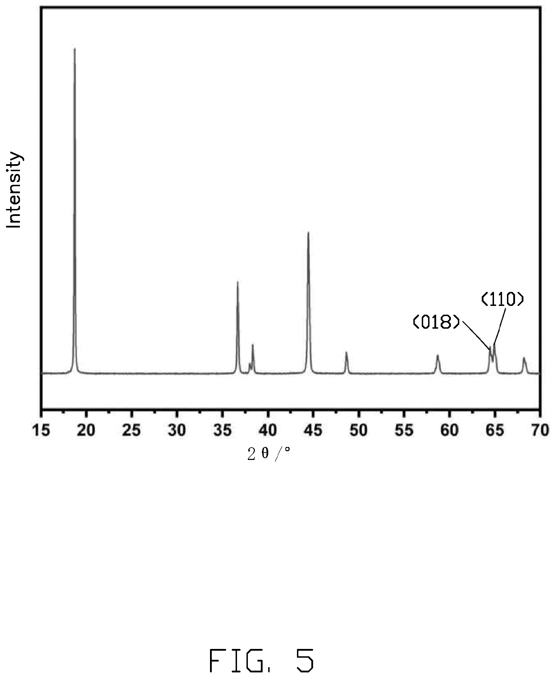

(1) The primary materials for synthesizing the precursor were nickel sulfate, cobalt sulfate and manganese sulfate. Nickel sulfate, cobalt sulfate, and manganese sulfate were mixed, wherein a molar ratio of nickel, cobalt, and manganese was 8:1:1. Then deionized water was added into the primary materials and stirred to form a salt solution with a concentration of 2.0 mol/L.
(2) A sodium hydroxide solution of 9 mol/L was added as the precipitant alkali to the reaction kettle. Deionized water was then added to the reaction kettle, and the mixture was stirred uniformly to adjust the pH to 12. Ammonia water was added, the ammonia concentration was controlled to be 2 g/L, the solution temperature was maintained at 40 °C. Nitrogen was continuously introduced as a protective gas.
(3) The salt solution obtained by step (1) was fed into the reaction kettle at a flow rate of 3.5 L/h. The stirring frequency of the reaction kettle was 40 Hz. Ammonia water was continuously added as a complexing agent and nitrogen was introduced to the reaction kettle to maintain the pH of the reaction system at 11.50. At the same time, a magnesium sulfate solution of 1 mol/L was simultaneously fed at a speed of 0.07 L/h for co-precipitation reaction. An amount of slurry was taken from the reaction kettle every 2 h, and the slurry was subjected to centrifugation, filtration, washing, drying and sieving to obtain a dried sample, and the particle size of the dried sample was tested using a Malvern particle size analyzer.
(4) When the D50 of the precursor grew to 1.5 µm, the feeding rate of magnesium sulfate was reduced at a speed of 0.01 L/h until zero, thereby obtaining a core of the precursor with doped Mg in a gradient concentration. The D50 of the core was 1.7 µm. Mg exists in the core in the form of magnesium hydroxide
(5) The flow rate of the nickel-cobalt-manganese salt solution was increased to 7 L/h, the stirring frequency was maintained at 40 Hz, the pH of the solution in the reaction kettle was adjusted to 11.0, and an aluminum nitrate solution of 2 mol/L was added at an initial rate of 0.02 L/h, The adding speed of the ammonium tungstate solution was increased by 0.02 L/h per hour until it reached 0.12 L/h, then the adding speed was kept constant. An amount of slurry was taken from the reaction kettle every 2 h, and the slurry was centrifuged, filtered, washed, dried and sieved to obtain a dried sample, and the particle size was tested using a Malvern particle size analyzer.
(6) When the D50 of the precursor reaches 2.0 µm, the reaction was stopped. The slurry in the reaction kettle was centrifuged, filtered, washed, dried and sieved to obtain a ternary precursor with a special structure and dual gradient concentration element distribution. Aluminum exists in the shell in the form of aluminum hydroxide.
(7) The precursor obtained from the previous step was mixed with lithium hydroxide and zirconium dioxide at a molar ratio of 1:1.03:0.001 at high speed, The mixture was loaded into a sagger, and placed in a muffle furnace. Oxygen was introduced to control the oxygen concentration inside the muffle furnace to 95%, and a sintering process was carried out at a high temperature of 810 °C for 8 hours. After cooling, the product was removed from the muffle furnace.
(8) The material obtained from the above steps was mixed with nano-vanadium pentoxide at a mass ratio of 1:0.001 at high speed. The mixture was loaded into a sagger, and placed in a muffle furnace. Oxygen was introduced to control an oxygen concentration of 95% inside the muffle furnace, and a sintering process was carried out at a high temperature of 870 °C for 10 hours. After cooling, the product was removed from the muffle furnace and subjected to mechanical dispersion using a mechanical pulverizer to de-agglomerate the soft aggregates formed during the high-temperature process.
(9) The material obtained from the above steps was mixed with nano- titanium dioxide at a molar ratio of 1:0.004 at high speed. The mixture was loaded into a sagger, and placed in a muffle furnace. Oxygen was introduced to control the oxygen concentration inside the muffle furnace to 80%, and a constant-temperature sintering process was carried out at 450 °C for 10 hours. After cooling, the product was removed from the muffle furnace, yielding highly dispersed single-crystal NCM811 ternary material.
   The SEM view of the single-crystal NCM811 ternary material was shown in Figure 4, and the XRD pattern was shown in Figure 5. As can be seen from Figure 4, the single-crystal particles of the NCM811 ternary material were obviously dispersed and exhibit a high single-crystallization characteristic. As can be seen from Figure 5, each diffraction peak was sharp, and the splitting of (018) and (110) peaks was obvious, indicating that the material has typical layered characteristics of a cathode material.
(10) The single-crystal NCM811 ternary material was sieved, then uniformly mixed with a binder (PVDF) and conductive carbon black at a ratio of 94:3:3 to obtain a positive electrode slurry. The positive electrode slurry was uniformly coated on an aluminum foil, dried in an oven at 130 °C, and roll-pressed to obtain a cathode sheet. A disk with a diameter of 14 mm was cut using a sheet cutter, vacuum-dried for 14 h, and then transferred into a glove box. In the glove box, a coin cell was assembled with a lithium sheet, spacers, a positive electrode case, a polypropylene separator and 1 mol/L LiPF₆ electrolyte.

### Embodiment 3

(1) The primary materials for synthesizing the precursor were nickel sulfate, cobalt sulfate and manganese sulfate. Nickel sulfate, cobalt sulfate, and manganese sulfate were mixed, wherein a molar ratio of nickel, cobalt, and manganese was 8:1:1. Then, deionized water was added into the primary materials and stirred to form a salt solution with a concentration of 2.0 mol/L.
(2) A sodium hydroxide solution of 9 mol/L was added as the precipitant alkali to the reaction kettle. Deionized water was then added to the reaction kettle, and the mixture was stirred uniformly to adjust the pH to 12. Ammonia water was added, the ammonia concentration was controlled to be 2 g/L, the solution temperature was maintained at 40 °C. Nitrogen was continuously introduced as a protective gas.
(3) The salt solution obtained by step (1) was fed into the reaction kettle at a flow rate of 3.5 L/h. The stirring frequency of the reaction kettle was 40 Hz. Ammonia water was continuously added as a complexing agent and nitrogen was introduced to the reaction kettle to maintain the pH of the reaction system at 11.70. At the same time, a zirconyl chloride solution of 1 mol/L was simultaneously fed at a speed of 0.07 L/h for co-precipitation reaction. An amount of slurry was taken from the reaction kettle every 2 h, and the slurry was subjected to centrifugation, filtration, washing, drying and sieving to obtain a dried sample, and the particle size of the dried sample was tested using a Malvern particle size analyzer.
(4) When the D50 of the precursor grew to 1.5 µm, the feeding rate of zirconyl chloride was reduced at a speed of 0.01 L/h until zero, thereby obtaining a core of the precursor with doped Zr in a gradient concentration. The D50 of the core was 1.7 µm. Zr exists in the core in the form of zirconium hydroxide.
(5) The flow rate of the nickel-cobalt-manganese salt solution was increased to 7 L/h, the stirring frequency was maintained at 40 Hz, the pH of the solution in the reaction kettle was adjusted to 11.0, and an aluminum nitrate solution of 2 mol/L was added at an initial rate of 0.1 L/h. The adding speed of the ammonium tungstate solution was increased by 0.1 L/h per hour until it reached 0.7 L/h, then the adding speed was kept constant. An amount of slurry was taken from the reaction kettle every 2 h, and the slurry was centrifuged, filtered, washed, dried and sieved to obtain a dried sample, and the particle size was tested using a Malvern particle size analyzer.
(6) When the D50 of the precursor reaches 2.0 µm, the reaction was stopped. The slurry in the reaction kettle was centrifuged, filtered, washed, dried and sieved to obtain a ternary precursor with a special structure and dual gradient concentration element distribution. Aluminum exists in the shell in the form of aluminum hydroxide.
(7) The precursor obtained from the previous step was mixed with lithium hydroxide and zirconium dioxide at a molar ratio of 1:1.03:0.001 at high speed The mixture was loaded into a sagger, and placed in a muffle furnace. Oxygen was introduced to control the oxygen concentration inside the muffle furnace to 95%, and a sintering process was carried out at a high temperature of 810 °C for 8 hours. After cooling, the product was removed from the muffle furnace.
(8) The material obtained from the above steps was mixed with nano-vanadium pentoxide at a mass ratio of 1:0.001 at high speed. The mixture was loaded into a sagger, and placed in a muffle furnace. Oxygen was introduced to control an oxygen concentration of 95% inside the muffle furnace, and a sintering process was carried out at a high temperature of 870 °C for 10 hours. After cooling, the product was removed from the muffle furnace and subjected to mechanical dispersion using a mechanical pulverizer to de-agglomerate the soft aggregates formed during the high-temperature process.
(9) The material obtained from the above steps was mixed with nano- titanium dioxide at a molar ratio of 1:0.002 at high speed. The mixture was loaded into a sagger, and placed in a muffle furnace. Oxygen was introduced to control the oxygen concentration inside the muffle furnace to 80%, and a constant-temperature sintering process was carried out at 450 °C for 10 hours. After cooling, the product was removed from the muffle furnace, yielding highly dispersed single-crystal NCM811 ternary material.
(10) The single-crystal NCM811 ternary material was sieved, then uniformly mixed with a binder (PVDF) and conductive carbon black at a ratio of 94:3:3 to obtain a positive electrode slurry. The positive electrode slurry was uniformly coated on an aluminum foil, dried in an oven at 130 °C, and roll-pressed to obtain a cathode sheet. A disk with a diameter of 14 mm was cut using a sheet cutter, vacuum-dried for 14 h, and then transferred into a glove box. In the glove box, a coin cell was assembled with a lithium sheet, spacers, a positive electrode case, a polypropylene separator and 1 mol/L LiPF₆ electrolyte.

### Embodiment 4

(1) The primary materials for synthesizing the precursor were nickel sulfate, cobalt sulfate and manganese sulfate. Nickel sulfate, cobalt sulfate, and manganese sulfate were mixed, wherein a molar ratio of nickel, cobalt, and manganese was 8:1:1. Then, deionized water was added into the primary materials and stirred to form a salt solution with a concentration of 2.0 mol/L.
(2) A sodium hydroxide solution of 9 mol/L was added as the precipitant alkali to the reaction kettle. Deionized water was then added to the reaction kettle, and the mixture was stirred uniformly to adjust the pH to 12. Ammonia water was added, the ammonia concentration was controlled to be 2 g/L, the solution temperature was maintained at 40 °C. Nitrogen was continuously introduced as a protective gas.
(3) The salt solution obtained by step (1) was fed into the reaction kettle at a flow rate of 3.5 L/h. The stirring frequency of the reaction kettle was 40 Hz. Ammonia water was continuously added as a complexing agent and nitrogen was introduced to the reaction kettle to maintain the pH of the reaction system at 11.50. At the same time, a zirconyl chloride solution of 1 mol/L was simultaneously fed at a speed of 0.07 L/h for co-precipitation reaction. An amount of slurry was taken from the reaction kettle every 2 h, and the slurry was subjected to centrifugation, filtration, washing, drying and sieving to obtain a dried sample, and the particle size of the dried sample was tested using a Malvern particle size analyzer.
(4) When the D50 of the precursor grew to 1.4 µm, the feeding rate of zirconyl chloride was reduced at a speed of 0.01 L/h until zero, thereby obtaining a core of the precursor with doped Zr in a gradient concentration. The D50 of the core was 1.6 µm. Zr exists in the core in the form of zirconium hydroxide.
(5) The flow rate of the nickel-cobalt-manganese salt solution was increased to 7 L/h, the stirring frequency was maintained at 40 Hz, the pH of the solution in the reaction kettle was adjusted to 11.0, and a sodium tungstate solution of 1 mol/L was added at an initial rate of 0.1 L/h. The adding speed of the ammonium tungstate solution was increased by 0.1 L/h per hour until it reached 1 L/h, then the adding speed was kept constant. An amount of slurry was taken from the reaction kettle every 2 h, and the slurry was centrifuged, filtered, washed, dried and sieved to obtain a dried sample, and the particle size was tested using a Malvern particle size analyzer.
(6) When the D50 of the precursor reaches 1.9 µm, the reaction was stopped. The slurry in the reaction kettle was centrifuged, filtered, washed, dried and sieved to obtain a ternary precursor with a special structure and dual gradient concentration element distribution. Tungsten exists in the shell in the form of tungstate.
(7) The precursor obtained from the previous step was mixed with lithium hydroxide and zirconium dioxide at a molar ratio of 1:1.03:0.001 at high speed. The mixture was loaded into a sagger, and placed in a muffle furnace. Oxygen was introduced to control the oxygen concentration inside the muffle furnace to 95%, and a sintering process was carried out at a high temperature of 810 °C for 8 hours. After cooling, the product was removed from the muffle furnace.
(8) The material obtained from the above steps was mixed with nanoscale B2O3 at a mass ratio of 1:0.002 at high speed. The mixture was loaded into a sagger, and placed in a muffle furnace. Oxygen was introduced to control an oxygen concentration of 95% inside the muffle furnace, and a sintering process was carried out at a high temperature of 870 °C for 10 hours. After cooling, the product was removed from the muffle furnace and subjected to mechanical dispersion using a mechanical pulverizer to de-agglomerate the soft aggregates formed during the high-temperature process.
(9) The material obtained from the above steps was mixed with nano- titanium dioxide at a molar ratio of 1:0.002 at high speed. The mixture was loaded into a sagger, and placed in a muffle furnace. Oxygen was introduced to control the oxygen concentration inside the muffle furnace to 80%, and a constant-temperature sintering process was carried out at 450 °C for 10 hours. After cooling, the product was removed from the muffle furnace, yielding highly dispersed single-crystal NCM811 ternary material.
(10) The single-crystal NCM811 ternary material was sieved, then uniformly mixed with a binder (PVDF) and conductive carbon black at a ratio of 94:3:3 to obtain a positive electrode slurry. The positive electrode slurry was uniformly coated on an aluminum foil, dried in an oven at 130 °C, and roll-pressed to obtain a cathode sheet. A disk with a diameter of 14 mm was cut using a sheet cutter, vacuum-dried for 14 h, and then transferred into a glove box. In the glove box, a coin cell was assembled with a lithium sheet, spacers, a positive electrode case, a polypropylene separator and 1 mol/L LiPF₆ electrolyte.

### Embodiment 5

(1) The primary materials for synthesizing the precursor were nickel sulfate, cobalt sulfate and manganese sulfate. Nickel sulfate, cobalt sulfate, and manganese sulfate were mixed, wherein a molar ratio of nickel, cobalt, and manganese was 8:1:1. Then, deionized water was added into the primary materials and stirred to form a salt solution with a concentration of 2.0 mol/L.
(2) A sodium hydroxide solution of 9 mol/L was added as the precipitant alkali to the reaction kettle. Deionized water was then added to the reaction kettle, and the mixture was stirred uniformly to adjust the pH to 12. Ammonia water was added, the ammonia concentration was controlled to be 2 g/L, the solution temperature was maintained at 40 °C. Nitrogen was continuously introduced as a protective gas.
(3) The salt solution obtained by step (1) was fed into the reaction kettle at a flow rate of 3.5 L/h. The stirring frequency of the reaction kettle was 40 Hz. Ammonia water was continuously added as a complexing agent and nitrogen was introduced to the reaction kettle to maintain the pH of the reaction system at 11.50. At the same time, a zirconyl chloride solution of 1 mol/L was simultaneously fed at a speed of 0.07 L/h for co-precipitation reaction. An amount of slurry was taken from the reaction kettle every 2 h, and the slurry was subjected to centrifugation, filtration, washing, drying and sieving to obtain a dried sample, and the particle size of the dried sample was tested using a Malvern particle size analyzer.
(4) When the D50 of the precursor grew to 1.4 µm, the feeding rate of zirconyl chloride was reduced at a speed of 0.01 L/h until zero, thereby obtaining a core of the precursor with doped Zr in a gradient concentration. The D50 of the core was 1.6 µm. Zr exists in the core in the form of zirconium hydroxide.
(5) The flow rate of the nickel-cobalt-manganese salt solution was increased to 6 L/h, the stirring frequency was maintained at 40 Hz, the pH of the solution in the reaction kettle was adjusted to 11.0, and a sodium molybdate solution of 2 mol/L was added at an initial rate of 0.08 L/h. The adding speed of the ammonium tungstate solution was increased by 0.02 L/h per hour until it reached 0.24 L/h, then the adding speed was kept constant. An amount of slurry was taken from the reaction kettle every 2 h, and the slurry was centrifuged, filtered, washed, dried and sieved to obtain a dried sample, and the particle size was tested using a Malvern particle size analyzer.
(6) When the D50 of the precursor reaches 1.9 µm, the reaction was stopped. The slurry in the reaction kettle was centrifuged, filtered, washed, dried and sieved to obtain a ternary precursor with a special structure and dual gradient concentration element distribution.
(7) The precursor obtained from the previous step was mixed with lithium hydroxide and zirconium dioxide at a molar ratio of 1:1.03:0.001 at high speed. The mixture was loaded into a sagger, and placed in a muffle furnace. Oxygen was introduced to control the oxygen concentration inside the muffle furnace to 95%, and a sintering process was carried out at a high temperature of 810 °C for 8 hours. After cooling, the product was removed from the muffle furnace.
(8) The material obtained from the above steps was mixed with nanoscale B2O3 at a mass ratio of 1:0.003 at high speed. The mixture was loaded into a sagger, and placed in a muffle furnace. Oxygen was introduced to control an oxygen concentration of 95% inside the muffle furnace, and a sintering process was carried out at a high temperature of 870 °C for 10 hours. After cooling, the product was removed from the muffle furnace and subjected to mechanical dispersion using a mechanical pulverizer to de-agglomerate the soft aggregates formed during the high-temperature process.
(9) The material obtained from the above steps was mixed with nano- titanium dioxide at a molar ratio of 1:0.0015 at high speed. The mixture was loaded into a sagger, and placed in a muffle furnace. Oxygen was introduced to control the oxygen concentration inside the muffle furnace to 80%, and a constant-temperature sintering process was carried out at 450 °C for 10 hours. After cooling, the product was removed from the muffle furnace, yielding highly dispersed single-crystal NCM811 ternary material.
(10) The single-crystal NCM811 ternary material was sieved, then uniformly mixed with a binder (PVDF) and conductive carbon black at a ratio of 94:3:3 to obtain a positive electrode slurry. The positive electrode slurry was uniformly coated on an aluminum foil, dried in an oven at 130 °C, and roll-pressed to obtain a cathode sheet. A disk with a diameter of 14 mm was cut using a sheet cutter, vacuum-dried for 14 h, and then transferred into a glove box. In the glove box, a coin cell was assembled with a lithium sheet, spacers, a positive electrode case, a polypropylene separator and 1 mol/L LiPF₆ electrolyte.

### Performance Test

The coin cells of Embodiments 1 to 5 were evaluated for electrical performance using a Wuhan LAND battery test system (Model: CT3001A). Charge-discharge tests were performed at 0.1C rate within a voltage range of 3.0-4.30 V to test discharge capacity. Cycle charge-discharge tests were performed at 0.1C rate at room temperature to test capacity retention after 50 cycles. The test results of Embodiments 1 to 5 are shown in the following table.

| Sample | Discharge capacity | Capacity retention after 50 cycles |
|---|---|---|
| Embodiment1 | 200.3mAh/g | 97.9% |
| Embodiment2 | 199.2 mAh/g | 97.4% |
| Embodiment3 | 200.5 mAh/g | 96.8 % |
| Embodiment4 | 198.8 mAh/g | 97.1% |
| Embodiment5 | 198.3 mAh/g | 97.5% |

According to the test results of Embodiments 1 to 5, batteries made from the positive electrode active material prepared using the precursor of the present disclosure exhibit excellent performance.

It should be noted that the above descriptions are merely specific embodiments of the present application, yet the scope of protection of the present application is not limited thereto. Any person skilled in the art may easily conceive of variations or substitutions within the technical scope disclosed in the present application, all of which shall fall within the protection scope of the present application. In cases where there is no conflict, the embodiments and features of the embodiments of the present application may be combined with each other. Therefore, the scope of protection of the present application shall be subject to the scope defined by the claims.

## Claims

1. A precursor of a positive electrode active material, **characterized in that**, a particle of the precursor comprises a core and a shell covering the core;
each of the core and the shell is made of nickel cobalt manganese oxide or nickel cobalt manganese hydroxide, a chemical formula of the nickel cobalt manganese hydroxide is NiₓCo_{γ}Mnz(OH)₂, a chemical formula of the nickel cobalt manganese oxide is NiₓCo_{γ}MnzO, and 0.33 ≤ x ≤ 1.0, 0 ≤ y ≤ 0.33, x + y + z = 1;
the core is doped with a fluxing agent, and the fluxing agent is selected from one or more of an oxide, a carbonic acid compound, and a hydroxide of a first metal element, and the first metal element is at least one of Sr, Li, Mg, Ni, Co, and Zr; and
the shell is doped with a reaction inhibitor, and the reaction inhibitor is selected from one or more of a lithium compound, an oxide, a carbonic acid compound, a hydroxide, and other compounds of a second metal element, and the second metal element is at least one of Ta, W, Al, Mn, Mo, and La.

2. The precursor of the positive electrode active material according to claim 1, **characterized in that**, along a direction from a center of the core to the shell, a concentration of the fluxing agent gradually decreases, and a concentration of the reaction inhibitor gradually increases.

3. The precursor of the positive electrode active material according to claim 1, **characterized in that**, a weight of the fluxing agent is 100 ppm to 2000 ppm based on a total weight of the precursor, and a weight of the reaction inhibitor is 100 ppm to 4000 ppm based on a total weight of the precursor.

4. The precursor of the positive electrode active material according to claim 1, **characterized in that**, an outer diameter of the particle of the precursor is in a range of 3.0 µm to 8.0 µm.

5. The precursor of the positive electrode active material according to claim 1, **characterized in that**, a specific surface area of the particle of the precursor is in a range of 5 m²/g to 50 m²/g.

6. The precursor of the positive electrode active material according to claim 1, **characterized in that**, a diameter of the core is at least 1.3 µm.

7. A method for preparing a positive electrode active material, **characterized by** comprising:
subjecting the precursor of the positive electrode active material according to any one of claims 1 to 6 and a lithium source to a primary sintering at a temperature of 600°C to 950 °C in an air atmosphere or a high-purity oxygen atmosphere;
mixing a product of the primary sintering with an activity inhibitor for a secondary sintering at a temperature of 300 °C to 850 °C in a high-purity oxygen atmosphere; and
mixing a product of the secondary sintering with a nano-coating material for a tertiary sintering at a temperature of 300 °C to 850 °C in a high-purity oxygen atmosphere, wherein the nano-coating material is configured to suppress reactions with an electrolyte and improve material interface reaction kinetics.

8. The method according to claim 7, **characterized in that**, the activity inhibitor is selected from one or more of B₂O₃, V₂O₅, V₂O₄, Bi₂O₃, MnO₂, MoO₃, LaNO₃, La₂O, and NbNO₃, and a mass ratio of the product of the primary sintering to the activity inhibitor is 1:0.0005 to 1:0.01.

9. The method according to claim 7, **characterized in that**, the nano-coating material is selected from at least one of nanoscale aluminum oxide, nanoscale titanium oxide, nanoscale aluminum hydroxide, nanoscale aluminum oxyhydroxide, and nanoscale tungsten oxide, and a mass ratio of the product of the secondary sintering to the nano-coating material is 1:0.001 to 1:0.02.

10. A positive electrode active material, **characterized in that**, the positive electrode active material is prepared by the method according to claim 7.

11. A positive electrode, **characterized in that**, the positive electrode comprises a positive electrode current collector and a positive electrode active material layer disposed on the positive electrode current collector, the positive electrode active material layer comprises a positive electrode active material prepared by the method according to claim 7.

12. A lithium-ion battery, **characterized in that**, the lithium-ion battery comprises a positive electrode, a separator and a negative electrode stacked in sequence, and the positive electrode is the positive electrode according to claim 11.

13. A method for preparing the precursor of the positive electrode active material according to any one of claims 1 to 6, **characterized by** comprising:
mixing a nickel salt, a cobalt salt, and a manganese salt with water to obtain a solution I;
adding a precipitating alkali solution into a reaction vessel;
continuously feeding the solution I and a complexing agent solution into the reaction vessel for reaction, thereby obtaining particles of the precursor;
adding a fluxing agent metal salt solution into the reaction vessel, wherein the fluxing agent metal salt solution is selected from at least one of Sr salt solution, Li salt solution, Mg salt solution, Ni salt solution, Co salt solution, and Zr salt solution;
gradually reducing the feeding rate of the fluxing agent metal salt solution into the reaction vessel to zero when the particles of the precursor grow to 1.2 µm to 1.6 µm ;
adding a reaction inhibitor metal salt solution into the reaction vessel, and gradually increasing the feeding rate of the reaction inhibitor metal salt solution into the reaction vessel, wherein the reaction inhibitor metal salt solution is selected from at least one of Ta oxide solution, W salt solution, Al salt solution, Mn salt solution, Mo salt solution, and La salt solution; and
terminating the reaction, and subjecting a slurry in the reaction vessel to centrifugation, filtration, washing, drying, and sieving to obtain the particles of the precursor.
